# EUROPÄISCHE PATENTANMELDUNG

(11) **EP 4 328 701 A1**
(43) Veröffentlichungstag der Anmeldung: **28.02.2024**
(21) Anmeldenummer: 23188509.6
(22) Anmeldetag: 28.07.2023
(51) Int. Cl.: G05D 1/241, G05D 1/242, G05D 1/246, G05D 1/00

(54) **VERFAHREN ZUM ERSTELLEN EINER UMGEBUNGSKARTE**

(30) Priorität: 26.08.2022 DE 102022208869
(71) Anmelder: BSH Hausgeräte GmbH, 81739 München (DE)
(72) Erfinder: Schnitzer, Frank, 97616 Bad Neustadt (DE); Hassfurter, Stefan, 96126 Maroldsweisach (DE)

(57) **Zusammenfassung**

Die Erfindung betrifft ein Verfahren zum Erstellen einer Umgebungskarte eines Umgebungsbereichs für den Betrieb eines mobilen, selbstfahrenden Geräts (10), insbesondere Bodenreinigungsgeräts wie einen Saug- und/oder Kehr- und/oder Wischroboter, mit den Verfahrensschritten: Detektieren des Umgebungsbereichs des Geräts (10) mit zumindest einem ersten Sensor (1) zum Erstellen einer ersten horizontalen Ebene (5a) der Umgebungskarte; Detektieren des Umgebungsbereichs des Geräts (10) mit zumindest einem zweiten Sensor (4) zum Erstellen einer zweiten horizontalen Ebene (5b) der Umgebungskarte, die sich von der ersten horizontalen Ebene (5a) unterscheidet; und Planen eines Bewegungspfades des Geräts (10) basierend auf der ersten und zweiten Ebene (5a, 5b) der Umgebungskarte, um insbesondere eine größtmögliche Bodenbearbeitung im Umgebungsbereich zu erzielen. Weiter betrifft die Erfindung ein mobiles, selbstfahrendes Gerät (10), das ein derartiges Verfahren durchführen kann.

## Beschreibung

Die Erfindung betrifft ein Verfahren zum Erstellen einer Umgebungskarte eines Umgebungsbereichs für den Betrieb eines mobilen, selbstfahrenden Geräts, insbesondere Bodenreinigungsgeräts, wie einen Saug- und/oder Kehr- und/oder Wischroboter, sowie ein mobiles, selbstfahrendes Gerät, das ein derartiges Verfahren umfasst.

Mobile, selbstfahrende Geräte, wie beispielsweise Saugroboter, haben die Aufgabe, autonom möglichst eine gesamte Bodenfläche zu reinigen. Dafür können diese Saugroboter durch Sensoren ihre Umgebung wahrnehmen, um sich autonom zu bewegen, ohne gegen Hindernisse zu stoßen, ideale Bewegungspfade zu bestimmen und einen optimalen, insbesondere maximalen Anteil des zu reinigenden Bodenbearbeitungsbereichs zu reinigen. Neben dem für den Fachmann bekannten Bumper, der Kollisionen mit Hindernissen auf Ebene eines Gerätekörpers erfassen kann, sind die Saugroboter häufig zusätzlich mit einem Lidar-Sensor ausgestattet, der die Roboterumgebung meist mit einem 360° Sichtfeld berührungslos und in mehreren Metern Entfernung abtastet, um diese Messwerte in eine Umgebungskarte einzutragen. Die Integration des Lidar-Sensors erfolgt überwiegend in Form eines Turm-ähnlichen Aufbaus auf dem Gerätegehäuse, sodass der Lidar-Sensor ein freies Sichtfeld über dem Saugroboter-Gerätekörper hat.

Dabei ist es möglich, dass über und/oder unter einer Mess-Ebene des Lidar-Sensors ein Umgebungsbereich verbleibt, der weder vom Lidar-Sensor noch vom Bumper erfasst wird, sodass die Gefahr besteht, dass der Saugroboter gegen Hindernisse, Gegenstände und Möbel stößt. Auch kann der Saugroboter mit dem Lidar-Turm keine Hindernisse unterfahren, die auf Höhe des Lidar-Sensors liegen. Jedoch ist es möglich, dass der Saugroboter zumindest einen Randbereich derartiger Hindernisse reinigt, insbesondere, wenn der Lidar-Turm örtlich vom Reinigungssystem entfernt auf dem Saugroboter angeordnet ist.

Es ist bekannt, den Lidar-Sensor zusätzlich mit einem separaten, dedizierten Bumper auszustatten. Wenn der Saugroboter mit seinem Lidar-Bumper gegen ein Hindernis stößt, fährt der Saugroboter nach Stand der Technik ein Stück zurück und versucht einige Zentimeter daneben erneut, ob er passieren kann. Dieses Fahrverhalten wiederholt sich solange, bis der Saugroboter einen Pfad findet, auf dem er sein Ziel erreichen kann, ohne gegen etwas zu stoßen. Ein Gedächtnis für die Bereiche, an denen der Lidar-Bumper einen Gegenstand detektiert hat, haben die herkömmlichen Saugroboter nicht. Bei einem erneuten Fahrmanöver entlang der entsprechenden Pfade stoßen die Saugroboter daher mit dem Lidar-Sensor erneut gegen das jeweilige Hindernis.

Aufgabe der Erfindung ist es, eine Umgebungskarte erstellen zu können, die eine logische Auswertung gegebener Umgebungssituationen und insbesondere eine Vermeidung wiederholter Kollisionen bei gleichzeitigem Sicherstellen der Reinigung erreichbarer Flächen gewährleistet.

Diese Aufgabe wird durch ein Verfahren zum Erstellen einer Umgebungskarte eines Umgebungsbereichs für den Betrieb eines mobilen, selbstfahrenden Geräts mit den Merkmalen des Anspruchs 1 gelöst. Weiter wird diese Aufgabe gelöst durch ein mobiles, selbstfahrendes Gerät mit den Merkmalen des Anspruchs 10. Vorteilhafte Ausgestaltungen und Weiterbildungen sind Gegenstand der Unteransprüche.

Erfindungsgemäß wird bei einem Verfahren zum Erstellen einer Umgebungskarte eines Umgebungsbereichs für den Betrieb eines mobilen, selbstfahrenden Geräts, insbesondere Bodenreinigungsgeräts wie ein Saug- und/oder Kehr- und/oder Wischroboter, der Umgebungsbereich des Geräts mit zumindest einem ersten Sensor detektiert, um eine erste horizontale Ebene der Umgebungskarte zu erstellen. Weiter wird der Umgebungsbereich des Geräts mit zumindest einem zweiten Sensor detektiert, um eine zweite horizontale Ebene der Umgebungskarte zu erstellen, die sich von der ersten horizontalen Ebene unterscheidet. Ein Bewegungspfad des Geräts wird basierend auf der ersten und zweiten Ebene der Umgebungskarte geplant, um insbesondere eine größtmögliche Bodenbearbeitung im Umgebungsbereich zu erzielen.

Vorliegend wird zur Hindernisdetektion demnach eine zweite Ebene der Umgebungskarte eingeführt, um auswerten zu können, welche Bodenbereiche für einen Gerätekörper des Geräts nicht erreichbar und somit nicht reinigbar sind, und welche Bodenbereiche ausschließlich für den ersten und/oder zweiten Sensor nicht passierbar sind. Durch geeignete Missions- und Pfadplanungen können anschließend hindernisnahe Bodenbereiche systematisch und insbesondere optimal gereinigt werden.

Beispielsweise weist der Gerätekörper eine signifikant geringere Höhe im Vergleich zum ersten und/oder zweiten Sensor auf. Der erste Sensor ist zum Beispiel ein Lidar-Sensor, der auf dem Gerätekörper in einem hinteren Bereich des Geräts angeordnet ist. Mit einem vorderen Bereich des Geräts kann dieses demnach Bodenbereiche erreichen und insbesondere auch reinigen, an denen das Gerät lediglich mit dem Lidar-Sensor mit Hindernissen kollidieren würde.

Diese zumindest teilweise unterfahrbaren Hindernisse werden in der zweiten Ebene der Umgebungskarte hinterlegt. Dadurch kann mit Vorteil ein wiederholtes Gegenstoßen dieser Hindernisse mit dem Lidar-Sensor gemieden werden. Eine Unterscheidung der Hindernisse auf Höhe des Gerätekörpers (erste horizontale Ebene) und Hindernisse auf Höhe des Lidar-Sensors (zweite horizontale Ebene) ermöglicht vorteilhafterweise das wiederholbare teilweise Unterfahren von Hindernissen, wodurch der erreichbare beziehungsweise reinigbare Anteil des gesamten Bodenbereichs steigt. Die gezielte Auswertung der beiden Ebenen der Umgebungskarte ermöglicht eine optimierte Planung definierter Fahrmanöver an oder entlang von Hindernissen.

Unter einem mobilen, selbstfahrenden Gerät ist insbesondere ein Bodenreinigungsgerät zu verstehen, welches insbesondere im Haushaltsbereich Bodenflächen autonom bearbeitet. Hierunter zählen unter anderem Saug-, Wisch- und/oder Kehrroboter wie beispielsweise Staubsaugerroboter und/oder Rasenmäherroboter. Diese Geräte arbeiten im Betrieb (Reinigungs- oder Schneidebetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden zu reinigen.

Unter der zu bearbeitenden Bodenfläche ist jegliche zu reinigende Raumfläche zu verstehen. Hierunter fallen unter anderem auch Teilbereiche einzelner Räume, einzelne Flächen einer Wohnung, einzelne Räume einer Wohnung und/oder die gesamte Bodenfläche der vollständigen Wohnung beziehungsweise des Wohnraums.

Um jegliche individuellen Umgebungsbesonderheiten beachten zu können, findet bevorzugt eine Explorationsfahrt mit dem mobilen, selbstfahrenden Gerät statt. Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden, und insbesondere den Umgebungsbereich des Geräts zu detektieren. Ziel einer Explorationsfahrt ist es insbesondere, Gegebenheiten des zu bearbeitenden Bodenbearbeitungsbereich einschätzen und/oder darstellen zu können.

Nach der Explorationsfahrt kennt das mobile, selbstfahrende Gerät seine Umgebung und kann diese in Form der Umgebungskarte an den Nutzer weitergeben, zum Beispiel in einer App an einem Mobilgerät. In der Umgebungskarte kann dem Nutzer die Möglichkeit gegeben werden, mit dem mobilen, selbstfahrenden Gerät zu interagieren. Der Nutzer kann mit Vorteil Informationen in der Umgebungskarte einsehen und bei Bedarf ändern und/oder anpassen.

Unter einer Umgebungskarte ist insbesondere jegliche Karte zu verstehen, die geeignet ist, die Umgebung des Bodenbearbeitungsbereichs mit all seinen Hindernissen und Gegenständen darzustellen. Beispielsweise zeigt die Umgebungskarte den Bodenbearbeitungsbereich mit den darin enthaltenen Möbeln und Wänden skizzenartig an. Die Umgebungskarte weist hierbei die erste und die zweite horizontale Ebene auf, die insbesondere horizontal zur Bodenfläche ausgerichtet sind und die zueinander im Wesentlichen parallel verlaufen. Jede Ebene stellt dabei die eigenen höhenrelevanten Hindernisse und Gegenstände dar, sodass sich die Ebenen zumindest bereichsweise unterscheiden.

Unter Hindernisse sind jegliche Objekte und/oder Gegenstände zu verstehen, die in einem Bodenbearbeitungsbereich angeordnet sind, beispielsweise dort liegen oder stehen, und die Bearbeitung durch das mobile, selbstfahrende Gerät beeinflussen, insbesondere behindern und/oder stören, wie beispielsweise Möbel, Wände, Vorhänge, Teppiche und ähnliches.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer.

Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist bevorzugt eine App, insbesondere eine Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise des Wohnbereichs ermöglicht. Die App zeigt dem Nutzer dabei vorzugsweise den zu reinigenden Bereich als Umgebungskarte sowie jegliche Hindernisse an.

Unter einem Gerätegehäuse ist insbesondere das äußere Gehäuse des Geräts zu verstehen, welches das Gerät nach außen hin abschließt. Im Inneren des Gerätegehäuses befindet sich also das Innenleben des Geräts. Der erste Sensor überragt das Gerätegehäuse, beispielsweise in vertikaler Richtung, also in Z-Richtung. Beispielsweise ist der erste Sensor auf einer Oberseite in einem hinteren oder mittigen Bereich des Gerätegehäuses angeordnet.

Unter einem ersten und einem zweiten Sensor ist insbesondere jeglicher Sensor zu verstehen, der dazu geeignet ist, Hindernisse bevorzugt zuverlässig zu detektieren. Dieser ist vorzugsweise taktil, tastend, berührungsempfindlich, laserbasiert und/oder kamerabasiert. Vorzugsweise ist der erste Sensor ein LIDAR-Sensor und/oder ein Laserturm, der seine Umgebung in einer horizontalen Ebene durch eine 360°-Rotation abtastet beziehungsweise abscannt. Dabei werden von dem ersten Sensor in gleichmäßigen Intervallen Messstrahlen, insbesondere Laserstrahlen, ausgesendet, die für eine Entfernungsmessung Verwendung finden. Die Rotation des ersten Sensors erfolgt um eine Drehachse, insbesondere um eine z-Achse, relativ zum Gerätegehäuse und wird durch einen Motor ausgeführt. Bevorzugt ist der zweite Sensor ein Bumper, der an dem Lidar-Sensor oder auf dem Gerätekörper angeordnet ist (Lidar-Bumper). Dieser detektiert bevorzugt bei Berührung Hindernisse und Gegenstände, sodass Hindernisse auf Höhenebene des Lidar-Sensors zuverlässig erkannt werden können, auch wenn der Lidar-Sensor selbst die Hindernisse nicht erfassen kann.

Unter einer horizontalen Ebene ist insbesondere jegliche Ebene zu verstehen, die parallel zu der Bodenfläche und in horizontaler und/oder waagerechter Richtung verläuft. Insbesondere verläuft die horizontale Ebene parallel zur Oberseite des Gerätegehäuses. Vorzugsweise liegt die erste horizontale Ebene in geringem Abstand, also knapp über der Oberseite des Gerätegehäuses. Die zweite horizontale Ebene erstreckt sich vorzugsweise oberhalb der ersten Ebene auf oberster Höhe des Lidar-Sensors.

Unter einem Bewegungspfad ist insbesondere eine geplante Fahrbewegung des Geräts zu verstehen, die als Ziel die größtmögliche Bodenbearbeitung im Umgebungsbereich des Geräts beinhaltet. Als größtmögliche Bodenbearbeitung ist dabei eine optimale Bearbeitung in einem größtmöglichen Bodenbereich zu verstehen, also auch bereichsweise unterhalb von Hindernissen und Gegenständen, falls die Gerätekörperhöhe (unabhängig von der Lidar-Sensor-Höhe) des Geräts dies zulässt.

Bei einer vorteilhaften Ausführungsform werden Pfade unterhalb von zumindest bereichsweise unterfahrbaren Hindernissen im Bewegungspfad integriert. Insbesondere Bereiche unter Hindernissen, die zwar mit dem ersten Sensor, insbesondere dem Lidar-Sensor, aufgrund der Höhe des Lidar-Sensors nicht unterfahrbar sind, jedoch eine größere Höhe als das Gerätegehäuse aufweisen, und daher mit dem Gerätegehäuse unterfahrbar sind, können so bereichsweise gereinigt werden. Dabei befindet sich mit Vorteil ein Saugmund mit Bürstenwalze des Geräts, der zum Reinigen des Bodens eingesetzt wird, auf einer dem ersten Sensor gegenüberliegenden Seite des Gerätegehäuses, sodass eine optimale Reinigung des Bodens gewährleistet werden kann. Dadurch können mit dem Saugmund Bodenbereiche erreicht und gereinigt werden, an denen das Gerät mit seinem Lidar-Sensor mit dem Hindernis kollidieren würde.

Bei einer weiteren vorteilhaften Ausführungsform sind die erste Ebene und die zweite Ebene unterschiedliche Höhenebenen über dem Boden. Insbesondere ist die erste Ebene dem Boden nähergelegen als die zweite Ebene. Die erste Ebene beinhaltet demnach bodennähere Hindernisse als die zweite Ebene. In der ersten Ebene sind damit Hindernisse eingetragen und dargestellt, die eine geringere Höhe aufweisen als die Hindernisse der zweiten Ebene. Die Ebenen der Umgebungskarte unterscheiden sich daher inhaltlich, insbesondere durch die eingetragenen höhenunterschiedlichen Hindernisse.

Bei einer weiteren vorteilhaften Ausführungsform enthalten die erste Ebene Hindernisse, die für einen Gerätekörper des Geräts nicht passierbar sind, und die zweite Ebene Hindernisse, die für den zweiten Sensor nicht passierbar sind. Vorzugsweise sind die Hindernisse der zweiten Ebene für den Gerätekörper passierbar. Beispielsweise werden Messergebnisse des Lidar-Sensors (erster Sensor) und/oder Kollisionsergebnisse eines Bumpers, der an einer Front des Gerätegehäuses angeordnet ist, in die erste Ebene eingetragen. In die zweite Ebene werden Kollisionsergebnisse des Lidar-Bumpers (zweiter Sensor) eingetragen. Die zwei getrennten Ebenen lassen dabei klar unterscheiden, welche Hindernisse in welcher Höhenebene (Gerätegehäuse-Höhe oder Lidar-Sensor-Höhe) auftreten.

Bei einer weiteren vorteilhaften Ausführungsform ist der Bewegungspfad ein kollisionsfreier Pfad. Dabei wird der Bewegungspfad bevorzugt derart geplant, dass die Hindernisse der zweiten Ebene zumindest bereichsweise von dem Gerätekörper unterfahren werden. Insbesondere wird nach dem Erstellen der zweiten Ebene eine Fahrtplanung durchgeführt, die den Bewegungspfad des Geräts erstellt. Dazu wird für einen Bewegungspfad jeder zu durchquerende Punkt auf einer der geplanten Trajektorie in beiden Ebenen der Umgebungskarte geprüft. Dabei wird in der ersten Ebene geprüft, ob der Gerätekörper Hindernisse passieren beziehungsweise unterfahren kann und in der zweiten Ebene, ob der Lidar-Sensor an den Hindernissen vorbeikommt beziehungsweise diese unterfahren kann. Die Auswertung wird hierbei beispielsweise separat durchgeführt und programmtechnisch mit einem "UND"-Kriterium verknüpft, um den kollisionsfreien Bewegungspfad zu erhalten. Diese verknüpfte Auswertung beider Ebenen ermöglicht nun, dass das Gerät automatisch maximal viel Bodenfläche mit dem Gerät befahren, unterfahren und damit reinigen und dennoch Hindernisse für den Lidar-Sensor umgehen kann.

Bei einer weiteren vorteilhaften Ausführungsform entspricht bei dem Unterfahren der Bewegungspfad des Geräts einem Sägezahnmuster. Durch den geplanten Bewegungspfad ist das Gerät in der Lage, Bereiche unter Hindernissen, zum Beispiel Möbel, etwa vordere Bereiche unter Sofas oder Schränken, durch eine gezielte Fahrt zu reinigen. Eine gezielte Auswertung der nicht durch Standardbewegungsmuster, wie beispielsweise "entlang von Kanten fahren" oder "den Raum mit Mäandern reinigen", abgedeckten Bereiche ermöglicht unter anderem spezielle Fahrmanöver des Geräts. Teilweise unterfahrbare Bereiche werden beispielsweise nicht durch ein seitliches Entlangfahren gereinigt, sondern durch ein Sägezahnmuster, bei dem das Gerät immer wieder frontal unter das Hindernis fährt, dann zurücksetzt und ein Stück seitlich versetzt erneut unter das Hindernis fährt.

Bei einer weiteren vorteilhaften Ausführungsform sind der erste Sensor ein Lidar-Sensor auf dem Gerätekörper und/oder ein Bumper am Gerätekörper, und der zweite Sensor ein Bumper für den Lidar-Sensor und/oder ein optischer Sensor am Lidar-Sensor. Insbesondere ist der zweite Sensor und dadurch bedingt das Erstellen der zweiten Ebene nicht auf Kollisionsereignisse mit dem ersten Sensor, also dem Lidar-Sensor, beschränkt. Auch Kamerasysteme oder andere Messsysteme auf Höhe des Lidar-Sensors können alternativ oder zusätzlich genutzt werden, um die zweite Ebene der Umgebungskarte mit Daten zu füllen und dadurch diese Ebene noch genauer zu machen. Dabei kann der zweite Sensor direkt am Lidar-Sensor oder am Gerätekörper mit Detektionshöhe der zweiten Ebene montiert beziehungsweise befestigt sein.

Weiter betrifft die Erfindung ein mobiles, selbstfahrendes Gerät, insbesondere ein Bodenreinigungsgerät zur autonomen Bearbeitung von Bodenflächen, wie einen Saug- und/oder Kehr- und/oder Wischroboter, das einen Gerätekörper, eine Auswerteeinheit, einen ersten Sensor und einen zweiten Sensor umfasst. Der erste Sensor ist auf dem Gerätekörper derart angeordnet, dass dieser eine erste horizontale Ebene eines Umgebungsbereichs detektiert. Der zweite Sensor ist an dem ersten Sensor und/oder auf dem Gerätekörper derart angeordnet, dass dieser eine zweite horizontale Ebene des Umgebungsbereichs detektiert, die sich von der ersten horizontalen Ebene unterscheidet. Die Auswerteeinheit erstellt eine Umgebungskarte basierend auf der ersten horizontalen Ebene und der zweiten horizontalen Ebene, und darauf basierend einen Bewegungspfad des Geräts mit einer größtmöglichen Bodenbearbeitung im Umgebungsbereich.

Jegliche Merkmale, Ausgestaltungen, Ausführungsformen und Vorteile das Verfahren betreffend finden auch in Zusammenhang mit dem erfindungsgemäßen Gerät Anwendung, und umgekehrt.

Die Erfindung wird anhand der nachfolgenden, lediglich Beispiele darstellenden Ausführungen der Erfindung näher erläutert. Es zeigen:
- Figuren 1A - 1C:: jeweils eine schematische Ansicht eines Ausführungsbeispiels eines mobilen, selbstfahrenden Geräts, das zum Durchführen des erfindungsgemäßen Verfahrens geeignet ist,
- Figuren 2A - 2C:: jeweils eine schematische Ansicht eines Ausführungsbeispiels eines erfindungsgemäßen Verfahrens zum Erstellen einer Umgebungskarte, und
- Figuren 3A, 3B:: jeweils eine schematische Ansicht eines Ausführungsbeispiels eines mobilen, selbstfahrenden Geräts nach dem Stand der Technik,
- Figuren 4A, 4B:: jeweils eine schematische Ansicht eines Ausführungsbeispiels eines mobilen, selbstfahrenden Geräts, das zum Durchführen des erfindungsgemäßen Verfahrens geeignet ist, und
- Figur 5:: ein Ablaufdiagramm eines Ausführungsbeispiels eines erfindungsgemäßen Verfahrens zum Erstellen einer Umgebungskarte.

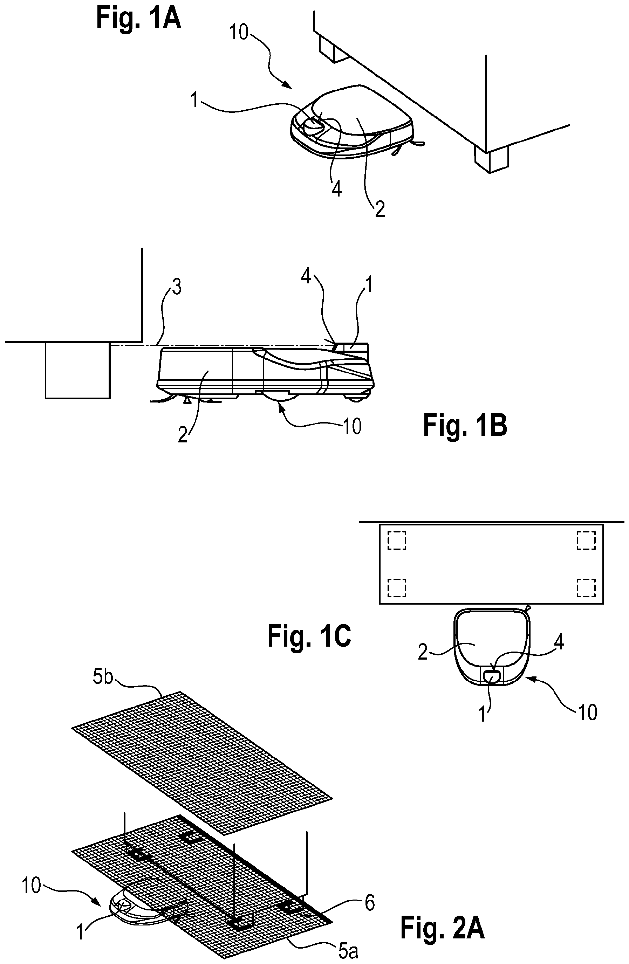

In den Figuren 1A, 1B, 1C ist ein mobiles, selbstfahrendes Gerät, insbesondere ein Saugroboter 10, gezeigt, der dabei ist, einen Boden zu reinigen, insbesondere zu saugen. Um hierzu seine Umgebung wahrnehmen zu können, sich autonom bewegen zu können ohne gegen Hindernisse zu prallen, ideale Bewegungspfade für Reinigungsfahrten bestimmen zu können und einen maximalen Anteil der zu reinigenden Bodenfläche säubern zu können, weist der Saugroboter 10 einen ersten Sensor, insbesondere einen Lidar-Sensor 1 auf. Der Lidar-Sensor 1 ist auf einem Gerätekörper 2 in einem hinteren mittigen Bereich des Gerätekörpers 2 angeordnet und scannt eine erste horizontale Ebene 3 der Umgebung in einem 360° Sichtfeld des Saugroboters ab, die sich knapp oberhalb einer Oberseite des Gerätekörpers befindet (siehe Figur 1B). Die hierbei detektierten Messwerte werden in eine Umgebungskarte eingetragen. Der Lidar-Sensor 1 weist insbesondere einen Turm-ähnlichen Aufbau auf dem Gerätekörper 2 auf, sodass der Lidar-Sensor 1 ein freies Sichtfeld über dem Gerätekörper 2 hat.

Neben dem Lidar-Sensor 2 kann der Saugroboter 10 einen Bumper am Gerätekörper 2 aufweisen (nicht dargestellt). Dieser Gerätebumper detektiert Hindernisse und Gegenstände, die unterhalb der Messebene des Lidar-Sensors 1 liegen. Insbesondere stößt der Gerätebumper gegen Gegenstände und Möbel, die vorher nicht vom Lidar-Sensor 1 erfasst worden sind, also insbesondere sehr flach ausgebildete Hindernisse, wie beispielsweise Schuhe, Spielzeug, Fußleisten und ähnliches.

Auch wenn der Saugroboter 10 mit seinem Lidar-Sensor 1 nicht alle Hindernisse vollständig unterfahren kann, unter die ein Saugroboter ohne vergleichbaren Turmaufbau fahren kann, ist es dennoch möglich, dass der Saugroboter 10 zumindest Randbereiche unterhalb der Hindernisse reinigt, die zwar zu niedrig für den Lidar-Sensor 1, nicht jedoch für den Gerätekörper 2 sind. Damit dabei die Reinigung gezielt, systematisch und insbesondere maximal erfolgt, werden die Messwerte der einzelnen Hindernissensoren entsprechend ausgewertet.

Insbesondere weist der Saugroboter 10 hierfür einen zweiten Sensor auf, der als Bumper am Lidar-Sensor ausgebildet ist (Lidar-Bumper 4). Dieser Lidar-Bumper 4 detektiert Hindernisse der Umgebung, die oberhalb der ersten Ebene 3 in einer zweiten Ebene angeordnet sind. Die zweite Ebene wird als weitere Ebene in die Umgebungskarte eingegliedert. Diese zweite Ebene umfasst dabei nur Messwerte, die von dem Lidar-Bumper 4 detektiert worden sind. In Kombination mit der ersten Ebene, die die Messwerte des Gerätebumpers und/oder des Lidar-Sensors umfasst, kann mit Vorteil nicht nur ausgewertet werden, wo der Saugroboter 10 keinen Bewegungspfad entlang planen kann, da er gegen ein Hindernis stoßen würde, sondern auch, wie der Saugroboter 10 fahren muss, um möglichst systematisch und maximal unter einem teilweise unterfahrbaren Hindernis zu reinigen.

Figur 1A zeigt eine isometrische Ansicht eines Saugroboters 10, der einen Bumper 4 im Lidar-Sensor 1 aufweist, der Hindernisse detektiert, die selbst nicht vom Lidar-Sensor 1 erfasst werden, jedoch zu Kollisionen mit dem Lidar-Sensor 1 führen können. Figur 1B zeigt eine seitliche Ansicht dazu. Figur 1C stellt eine Oberansicht der Figuren 1A, 1B dar.

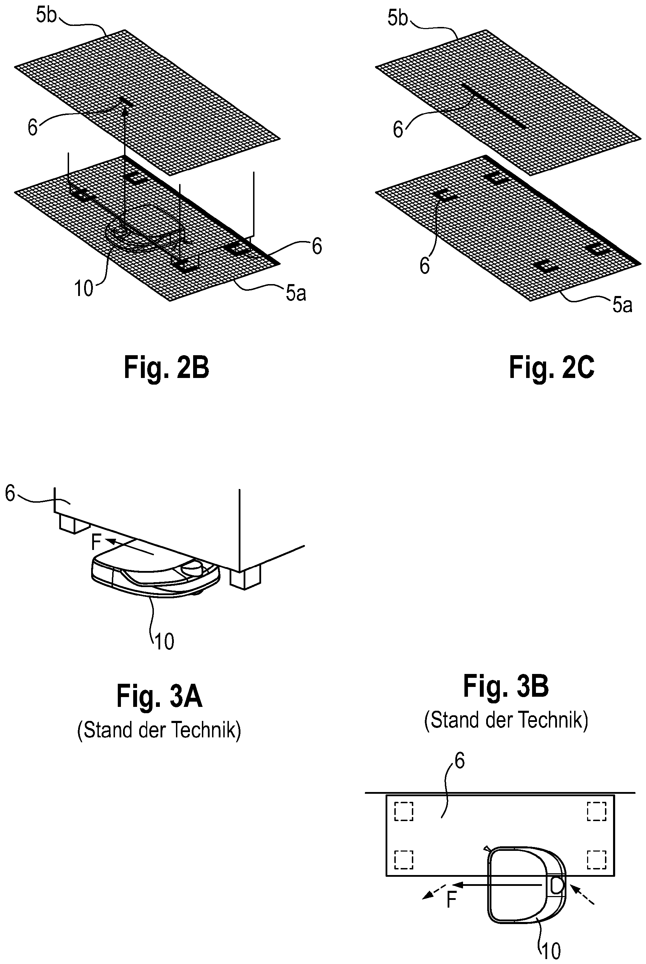

In den Figuren 2A, 2B und 2C ist das Verfahren zum Füllen der ersten Ebene 5a und zweiten Ebene 5b mit detektierten Hindernissen dargestellt, um die erfindungsgemäße Umgebungskarte zu erstellen. In die erste Ebene 5a werden alle Messergebnisse des Lidar-Sensors und optional Kollisionsereignisse des Gerätebumpers, der an einer Front des Gerätegehäuses angeordnet ist, eingetragen. Kollisionsereignisse des Lidar-Bumpers werden in der zweiten Ebene 5b eingetragen.

Bei einer Explorationsfahrt wird zunächst die erste Ebene 5a gefüllt, da der Lidar-Sensor ständig die Umgebung abtastet. Bei Kontakt eines Hindernisses mit dem Lidar-Bumper werden Hindernisse in die zweite Ebene 5b eingetragen. Zu Beginn der Explorationsfahrt ist die zweite Ebene 5b nur spärlich gefüllt (siehe Figuren 2A, 2B). Mit dem systematischen Abfahren der Bodenflächen während Reinigungsfahrten kommt der Saugroboter immer häufiger in Kontakt mit Hindernissen 6, deren Unterfahrhöhe zu einer Kollision mit dem Lidar-Sensor 1 führt. Mit der zunehmenden Anzahl an Reinigungsfahrten und somit mit jedem weiteren Gegenstoßen gegen ein Hindernis 6 wird die zweite Ebene 5b erweitert und somit umgebungsgetreuer. Die zwei Ebenen der Umgebungskarte lassen dabei unterscheiden, welche Hindernisse in welcher Höhenebene (Roboterhöhe oder Lidar-Höhe) auftreten.

Die Figuren 2A bis 2C zeigen das fortschreitende Erkunden der Umgebung und das damit einhergehende fortschreitende Füllen der zweiten Ebene 5b. In Figur 2B ist der Saugroboter 10, die Hindernisse 6 und die überlagerten Ebenen 5a, 5b der momentanen Umgebungskarte gezeigt. Figur 2C zeigt die finale Umgebungskarte nach mehreren Detektionen. Für den Saugroboter ist klar unterscheidbar, welche Hindernisse 6 den Gerätekörper und welche Hindernisse 6 den Lidar-Sensor betreffen.

Ein optimaler Bewegungspfad kann nach Einführung der zweiten Ebene 5b durchgeführt werden. Dazu wird für jeden Pfad jeder zu durchquerende Punkt auf der geplanten Trajektorie in beiden Ebenen 5a, 5b geprüft. In der ersten Ebene 5a wird geprüft, ob der Saugroboter alle Hindernisse 6 passieren kann. In der zweiten Ebene 5b wird geprüft, ob der Lidar-Sensor an den Hindernissen vorbeikommt. Beispielsweise finden zur optimalen Bewegungspfad-Planung separate Auswertungen Anwendung, die programmtechnisch mit einem "UND"-Kriterium verknüpft werden, um einen kollisionsfreien Pfad zu erhalten. Diese gemeinsame Auswertung beider Ebenen 5a, 5b ermöglicht mit Vorteil, dass der Saugroboter automatisch maximal viel Bodenfläche befahren und insbesondere reinigen kann, und dabei dennoch Hindernisse 6 für den Lidar-Sensor umgehen kann.

Als Ergebnis ist der Saugroboter 10 dadurch in der Lage, spezielle Bereiche unter Hindernissen wie Möbeln, etwa den vorderen Bereich unter Sofas oder Schränken, durch eine gezielte Fahrt zu reinigen.

Figuren 3A, 3B zeigen ein Standardbewegungsmuster F, insbesondere ein Fahren entlang von Kanten der Hindernisse 6. Hierbei unterfährt der Saugroboter 10 das Hindernis 6 nur knapp, um entlang des Hindernisses 6 zu reinigen. Eine maximale Reinigung, insbesondere in Bereichen unterhalb des Hindernisses 6, ist dadurch ausgeschlossen.

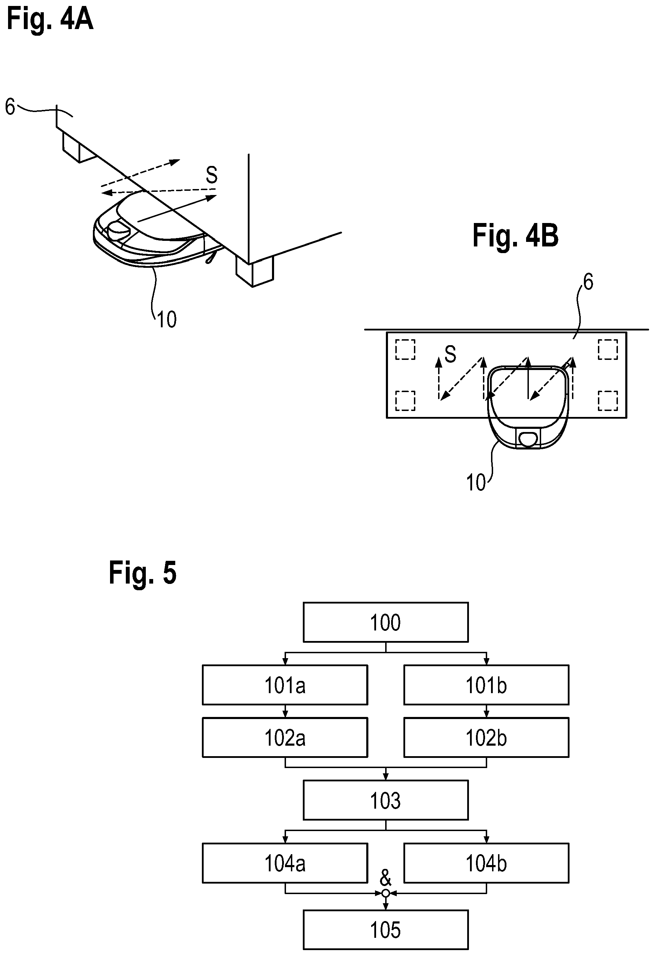

Figuren 4A, 4B stellen dagegen eine gezielte Fahrt des Saugroboters dar, die auf den zwei Ebenen der Umgebungskarte basieren. Die gezielte Auswertung ermöglicht spezielle Fahrmanöver, bei denen betroffene Bodenflächen nicht nur durch ein seitliches Entlangfahren gereinigt werden, wie es in den Figuren 3A, 3B gezeigt ist. Das spezielle Fahrmanöver umfasst beispielsweise ein Sägezahnmuster S, bei dem der Saugroboter immer wieder frontal unter das Hindernis 6 fährt, dann zurücksetzt und ein Stück seitlich versetzt erneut unter das Hindernis 6 fährt, wie es in Figuren 4A, 4B gezeigt ist. Dadurch kann der Saugroboter 10 seinen Saugmund möglichst weit nach hinten unter die Hindernisse 6 schieben, und so eine maximale Bodenreinigung auch unter Hindernissen 6 gewährleisten.

In Figur 5 ist ein Ablaufdiagramm für die Umgebungskarten-Erstellung basierend auf zwei Ebenen und Bewegungspfadplanung dargestellt. In Schritt 100 führt der Saugroboter eine Explorations- oder Reinigungsfahrt durch. Dabei erkennt der Saugroboter ein Hindernis mit seinem Lidar-Sensor oder seinem Gerätebumper (Schritt 101a) und trägt dieses detektierte Hindernis in die erste Ebene der Umgebungskarte ein (Schritt 102a). Erkennt der Saugroboter ein Hindernis mit dem Lidar-Bumper (Schritt 101b), trägt der Saugroboter dieses detektierte Hindernis in die zweite Ebene der Umgebungskarte ein (Schritt 102b). Anschließend plant der Saugroboter seinen optimalen beziehungsweise maximalen Bewegungspfad abhängig von der erstellten ersten und zweiten Ebene (Schritt 103). Insbesondere prüft der Saugroboter diesen geplanten Bewegungspfad auf der ersten Ebene der Umgebungskarte (Schritt 104a). Zudem prüft der Saugroboter den geplanten Bewegungspfad auf der zweiten Ebene der Umgebungskarte (Schritt 104b). Abschließend folgt der Saugroboter dem geplanten Weg, um seine Reinigung durchzuführen (Schritt 105).

## Patentansprüche

1. Verfahren zum Erstellen einer Umgebungskarte eines Umgebungsbereichs für den Betrieb eines mobilen, selbstfahrenden Geräts (10), insbesondere eines Bodenreinigungsgeräts wie einen Saug- und/oder Kehr- und/oder Wischroboter, mit den Verfahrensschritten:
- Detektieren des Umgebungsbereichs des Geräts (10) mit zumindest einem ersten Sensor (1) zum Erstellen einer ersten horizontalen Ebene (5a) der Umgebungskarte,
- Detektieren des Umgebungsbereichs des Geräts (10) mit zumindest einem zweiten Sensor (4) zum Erstellen einer zweiten horizontalen Ebene (5b) der Umgebungskarte, die sich von der ersten horizontalen Ebene (5a) unterscheidet, und
- Planen eines Bewegungspfades des Geräts (10) basierend auf der ersten und zweiten Ebene (5a, 5b) der Umgebungskarte, um insbesondere eine größtmögliche Bodenbearbeitung im Umgebungsbereich zu erzielen.

2. Verfahren gemäß Anspruch 1, wobei Pfade unterhalb von zumindest bereichsweise unterfahrbaren Hindernissen (6) im Bewegungspfad integriert werden.

3. Verfahren nach einem der vorhergehenden Ansprüche, wobei die erste Ebene (5a) und die zweite Ebene (5b) unterschiedliche Höhenebenen über dem Boden sind.

4. Verfahren nach einem der vorhergehenden Ansprüche, wobei der Bewegungspfad ein kollisionsfreier Pfad ist.

5. Verfahren nach einem der vorhergehenden Ansprüche, wobei die erste Ebene (5a) Hindernisse (6) enthält, die für einen Gerätekörper (2) des Geräts (10) nicht passierbar sind, und die zweite Ebene (5b) Hindernisse (6) enthält, die für den zweiten Sensor (4) nicht passierbar sind.

6. Verfahren nach Anspruch 5, wobei die Hindernisse (6) der zweiten Ebene (5b) für den Gerätekörper (2) passierbar sind.

7. Verfahren nach Anspruch 6, wobei der Bewegungspfad derart geplant wird, dass die Hindernisse (6) der zweiten Ebene (5b) zumindest bereichsweise von dem Gerätekörper (2) unterfahren werden.

8. Verfahren nach Anspruch 7, wobei bei dem Unterfahren der Bewegungspfad des Geräts (10) einem Sägezahnmuster (S) entspricht.

9. Verfahren nach einem der vorhergehenden Ansprüche, wobei der erste Sensor (1) ein Lidar-Sensor auf dem Gerätekörper (2) und/oder ein Bumper am Gerätekörper (2) ist, und der zweite Sensor (4) ein Bumper am Lidar-Sensor und/oder ein optischer Sensor am Lidar-Sensor ist.

10. Mobiles, selbstfahrendes Gerät (10), insbesondere Bodenreinigungsgerät zur autonomen Bearbeitung von Bodenflächen, wie ein Saug- und/oder Kehr- und/oder Wischroboter, umfassend einen Gerätekörper (2), eine Auswerteeinheit, einen ersten Sensor (1) und einen zweiten Sensor (4), wobei
- der erste Sensor (1) auf dem Gerätekörper (2) derart angeordnet ist, dass dieser eine erste horizontale Ebene (5a) eines Umgebungsbereichs detektiert,
- der zweite Sensor (4) an dem ersten Sensor (1) und/oder auf dem Gerätekörper (2) derart angeordnet ist, dass dieser eine zweite horizontale Ebene (5b) des Umgebungsbereichs detektiert, die sich von der ersten horizontalen Ebene (5a) unterscheidet, und
- die Auswerteeinheit eine Umgebungskarte basierend auf der ersten horizontalen Ebene (5a) und der zweiten horizontalen Ebene (5b), und darauf basierend einen Bewegungspfad des Geräts (10) mit einer größtmöglichen Bodenbearbeitung im Umgebungsbereich erstellt.
